# EUROPEAN PATENT APPLICATION

(11) **EP 3 470 824 A1**
(43) Date of publication of application: **17.04.2019**
(21) Application number: 17195691.5
(22) Date of filing: 10.10.2017
(51) Int. Cl.: G01N 21/77, G01N 21/64, B01D 46/00, F24F 3/16, F24F 11/39

(54) **SYSTEM AND METHOD FOR DETECTION OF A GASEOUS ALDEHYDE**

(71) Applicant: Koninklijke Philips N.V., 5656 AE Eindhoven (NL)
(72) Inventor: KONG, Tao (Terry), 5656 AE Eindhoven (NL); CHEN, Shuang, 5656 AE Eindhoven (NL)
(74) Representative: de Haan, Poul Erik

(57) **Abstract**

A system is for removing aldehyde from a gas. The system comprises a filter (14) through which at least a portion of the gas is to be passed for removing aldehyde from the gas and a detecting medium (16) through which at least a portion of the gas is to be passed comprising photoluminescent carbon-based dots (18), and a light source for emitting an excitation light (E) through the detecting medium for exciting the carbon-based dots (18) which thereby emit luminescent light (L). The emitted luminescent light is characteristic of the amount of formaldehyde adsorbed by the detecting medium and the filter. The filter lifetime can therefore be determined.

## Description

### FIELD OF THE INVENTION

The present invention relates to systems for removing aldehyde from a gas, methods for determining the lifetime of filters and air purifiers comprising the systems.

### BACKGROUND OF THE INVENTION

Gaseous aldehydes are dangerous pollutants which can be frequently detected in the home and workplace. Examples of such gaseous aldehydes include formaldehyde and acetaldehyde.

In particular, formaldehyde is of significant concern to human health owing to its toxicity and volatility. Formaldehyde's primary non-industrial sources include wood products (for example hardwood, plywood, fiberboard and the like), combustion, tobacco smoke, textiles and glues.

Formaldehyde is a potential health risk to people even at very low concentrations. It may cause eye, nose and throat irritation, asthma, lung damage, nausea and, most importantly, it has been recognized as a carcinogen.

Accordingly, filters which remove formaldehyde from the air are useful.

The lifetime of a filter is dependent on the cumulate clean mass (CCM) which reflects the capacity of the filter to adsorb a particular pollutant. For example, some known commercially available filters are able to adsorb at least 1500 mg formaldehyde.

However, the CCM value does not help the consumer to determine when the filter should be changed. Currently, there are several methods to determine filter lifetime. One commonly used method is to measure operation time and compare that time to a pre-set lifetime. This method has limitations because it does not allow for the specific conditions under with the filter has operated, and therefore the amount of pollutant adsorbed compared to the maximum capacity. Another method is to estimate the clean air delivery rate (CADR) of the filter. When the CADR decreases to half of the initial value, the air purifier can alert the consumer to change the filter. Although certain progress has been made with this technique, it has low accuracy.

### SUMMARY OF THE INVENTION

There is therefore still a need for a reliable system for determining the lifetime of a formaldehyde filter.
The invention is defined by the claims.

According to a first aspect of the invention, there is provided a system for removing aldehyde from a gas, comprising:
a filter through which at least a portion of the gas is to be passed for removing aldehyde from the gas;
a detecting medium through which at least a portion of the gas is to be passed comprising photoluminescent carbon-based dots; and
a light source for emitting an excitation light through the detecting medium for exciting the carbon-based dots which thereby emit luminescent light.

Carbon-based dots (or carbon-based quantum dots) are small carbon nanoparticles (less than 10 nm in size). When irradiated with an excitation light, carbon-based dots are excited and emit luminescent light by fluorescence. The invention makes use of the finding that the photoluminescent properties of carbon dots are changed after being in contact with an aldehyde. Thus if the gas which passes through the detecting medium contains an aldehyde, the luminescent light emitted by the carbon-based dots is changed. The type of change to the detecting medium is dependent on the amount of aldehyde that has passed through the detecting medium. Therefore, a comparison of luminescent light emitted before and after the gas is passed through the detecting medium allows estimation of the amount of aldehyde that has been adsorbed by the detecting medium. By calibration, because the same gas has passed through the filter and detecting medium, the amount of aldehyde that has been adsorbed by the filter can be determined, which allows determination of the remaining lifetime of the filter.

Such a system allows an assessment of the filter lifetime which reflects the actual operating conditions of the filter and therefore amount of aldehyde adsorbed relative to the filter capacity. Moreover, the system is low-cost, small sized, and non-toxic.

The gaseous aldehyde may be one or more of formaldehyde, acetaldehyde, propionaldehyde, benzaldehyde and acrylaldehyde. In particular, the gaseous aldehyde is formaldehyde which is a known carcinogen that can be present in the home and workplace.

The detecting medium can be a liquid, gel or porous solid. In particular, the detecting medium can be a porous solid. A solid detecting medium can be easily integrated into a device.

The filter and the detecting medium may be positioned in parallel to each other so a portion of the gas flows through the filter and the remaining portion of the gas flows through the detecting medium. Therefore, the amount of formaldehyde that has been adsorbed by the detecting medium is directly proportional to the amount of formaldehyde that has passed through the filter.
The carbon-based dots may be graphene dots or graphene quantum dots (GQDs), carbon nanodots or carbon quantum dots, or polymer dots.

The carbon-based dots may be functionalized with organic polar groups, wherein the organic polar group is an amino group. An organic polar group which is an amine has been found to be a useful group to interact and bind with the aldehyde.

The excitation light (E) may have a wavelength of between 250 nm and 500 nm, preferably between 250 and 450 nm, between 300 and 400 nm, more preferably between 350 and 380 nm. Particular preferred excitation light has a wavelength between 350 nm and 365 nm. The luminescent light (L) may have a wavelength of between 400 nm and 600 nm, preferably between 410 and 550 nm, between 420 and 500 nm, more preferably between 430 and 450 nm. Particular preferred luminescent light has a wavelength between 435 nm and 440 nm. It will be appreciated that the wavelengths of the excitation light and/or luminescent light are not particularly limited. Any wavelength range may be employed as long as excitation light is sufficiently distinguished from luminescent light. For instance, the wavelength of the excitation light may be approximately 350 nm and the wavelength of the luminescent light may be approximately 435 nm.

In one embodiment of the system the gas may be air and the system may be an air purifier.

The system may comprise a detector for detecting the luminescent light, the luminescent light having a luminescence property, and a controller for determining information relating to the luminescence property and estimating a remaining filter lifetime from the determined information.

The system may comprise an outer casing and an output window, the output window for providing an external view of at least a portion of the detecting medium.

According to a second aspect of the invention, there is provided a computer program for controlling an image processing unit to process an image captured of at least a portion of the detecting medium of the system according to the invention comprising an outer casing and an output window, wherein the computer program is adapted, when said program is run on the image processing unit, for determining information relating to a color spectrum of the image and estimating a remaining filter lifetime from the determined information.

The output window in the casing of the system allows a user to see the detecting medium. Therefore, the user may capture an image of the detecting medium with an image capture device. A computer program can analyze the color spectrum of that image, and by comparing that color spectrum to the color spectrum before contact with formaldehyde, thereby determine how much formaldehyde has passed through the detecting medium and thus the lifetime of the filter. Such a system allows the user to determine the filter lifetime in real-time without bulky instrumentation and highly-trained operators.

According to a third aspect of the invention, there is provided a method of estimating a remaining filter lifetime of a filter for reducing an amount of aldehyde in a gas, comprising:
illuminating a detecting medium through which the gas has been passed comprising photoluminescent carbon-based dots with an excitation light for exciting the carbon-based dots which thereby emit luminescent light, wherein the gas has been passed through the filter and the detecting medium for a same time period;
detecting the luminescent light, the luminescent light having a luminescence property;
determining information relating to the luminescence property; and
estimating a remaining filter lifetime from the determined information.

As mentioned, such a method of determining filter lifetime does not require bulky instrumentation with a high power demand and which requires well-trained operators.

The detection and analysis of the luminescent light may take place within the system filter system (such as an air purifier) without needing any user input.

Alternatively, detecting the luminescent light may comprise capturing an image of a portion of a surface of the detecting medium, and determining information relating to the luminescence property comprises determining information relating to a color spectrum of the image.

This image capture may be external to the filter system, and carried out by the user, for example using a mobile phone camera or other camera.

The information relating to a color spectrum may comprise the red, green and blue color components.

### BRIEF DESCRIPTION OF THE DRAWINGS

Examples of the invention will now be described in detail with reference to the accompanying drawings, in which:
Fig. 1 shows a first example of a system for removing aldehyde from a gas;
Fig. 2a shows a filter and a detecting medium which can be used in the system and 2b shows a second example of a system for removing aldehyde from a gas;
Fig. 3 shows a third example of a system for removing aldehyde from a gas;
Fig. 4a and 4b show processes for preparing and functionalizing carbon-based dots;
Fig. 5 shows variation of the red, green and blue components of luminescent light emitted by a detecting medium after adsorption of formaldehyde;
Fig. 6 shows variation of luminescent light emitted by a solution of carbon-based dots following addition of different amounts of formaldehyde solution;
Figs. 7a and 7b show variation of luminescent light emitted by a solution of carbon-based dots following addition of different amounts of formaldehyde solution;
Fig. 8 shows the variation of luminescent light emitted by a solution of carbon-based dots following addition of different amounts of formaldehyde;
Fig. 9 shows the lack of variation of luminescent light emitted by a solution of carbon-based dots following addition of methanol, ethanol, acetone and toluene; and
Fig. 10 shows the lack of variation of luminescent light emitted by a solution of carbon-based dots following addition of ethanol;

### DETAILED DESCRIPTION OF THE INVENTION

The invention provides a system for removing aldehyde from a gas. The system comprises a filter through which the gas is passed, and which removes the aldehyde from the gas, and a detecting medium through which at least a portion of the gas is passed comprising photoluminescent carbon-based dots. A light source emits an excitation light through the detecting medium for exciting the carbon based dots which thereby emit luminescent light. The characteristics of the light give information about the amount of aldehyde which has passed through, and this in turn enables an estimation to be made of the remaining filter lifetime.

The present invention is based on the use of carbon-based dots with photoluminescence (PL) properties, for example graphene quantum dots (GQDs), carbon nanodots and polymer dots, for determining the remaining lifetime of a filter for removing formaldehyde.

Carbon-based dots have photoluminescent properties (Zhu S. et al., The photoluminescence mechanism in carbon dots (Graphene quantum dots, carbon nanodots, and polymer dots): Current state and future perspective, Nano Research, vol. 8, pp. 355-381).

The invention is based on the discovery that the photoluminescent properties of carbon-based dots change when they are contacted with an aldehyde. Because the extent of the change is dependent on the amount of an aldehyde that has been adsorbed by the detecting medium, by analyzing the luminescent light the amount of an aldehyde adsorbed by the filter and hence that filter's remaining lifetime can be determined.

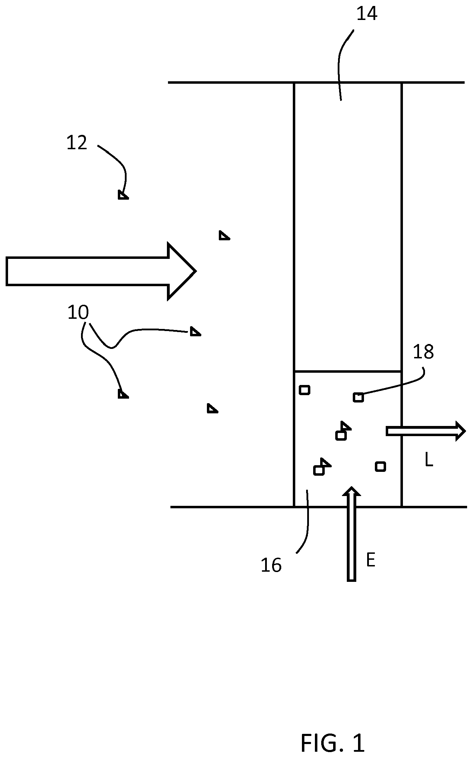

Fig. 1 shows an example of a system according to the invention for removing an aldehyde 10 from a gas. A gas (air) flow 12 comprising the aldehyde 10 is passed through both a filter 14 and a separate detecting medium 16 comprising carbon-based dots 18.

A flow control device (not shown) is used for inducing flow through the filter 14. It may comprise a fan, or a heater may instead be used to create a convective heat flow. Any pump may be used for this purpose. The gas flow may be air. Alternatively, a gas mixture may be employed as the gas flow, such as process gas employed in industry.

When the gas flow is air, the air may be from a working environment or from the home. The air may be filtered to remove particles, such as dust, before passing through the system of the invention.

The filter 14 can be any filter suitable for removing an aldehyde from a gas. An example of a suitable selective filter for formaldehyde is a corrugated filter comprising TRIS (tris(hydroxymethyl)aminomethane) as described in WO 97/045189A1, which filters formaldehyde with high efficiency and capacity. Another suitable filter for formaldehyde is a honeycomb structure filter comprising activated carbon or ceramic particles which are functionalized with noble metals. This kind of filter also exhibits high performance for formaldehyde removal.

The gaseous aldehyde may be any aldehyde. In particular, the aldehyde may be formaldehyde, acetaldehyde, propionaldehyde, benzaldehyde or acrylaldehyde, and especially formaldehyde. Formaldehyde is found in resins used in the manufacture of composite wood products (i.e. hardwood, plywood, particleboard and medium-density fiberboard), building materials and insulation, household products such as glues, permanent press fabrics, paints and coatings, lacquers and finishes, and paper products, preservatives used in some medicines, cosmetics and other consumer products such as dishwashing liquids and fabric softeners, and fertilizers and pesticides. In addition, formaldehyde is formed in emissions from unvented fuel burning appliances such as gas stoves and in cigarette smoke. Filters for removing formaldehyde are of particular use, because formaldehyde can cause irritation of the skin, eyes, nose, and throat, and high levels of exposure may cause some types of cancers.

The detecting medium 16 can be a porous solid material including transparent glasses or plastics which do not interact with the excitation light and luminescent light. Such suitable porous materials permit transmission of the excitation light and/or luminescent light to at least about 70% or more, such as at least about 80% or more, at least about 90% or more, at least about 95% or more or at least about 99.5% or more. Examples of suitable porous materials include fused silica, aerogel, zeolite, metal-organic frameworks (MOF) and nitrocellulose.

In another embodiment, the detecting medium can be a gel. One possible gel is aerogel.

In another embodiment, the detecting medium can be a liquid. In this embodiment, the detecting medium may be supported in a container with an air inlet tube transporting the gas into the detecting medium and air outlet tube at positioned higher than the air inlet tube transporting the gas out of the container. In one embodiment, the liquid is water.

The carbon-based dots 18 are carbon-based material on a nanometer scale. The carbon-based dots are dispersed in the detection medium 16 in a manner that a gas flow guided there through is in contact with the carbon-based dots. The dispersion is prepared by adding a solution of the carbon-based dots 18 to the detecting medium. When the detecting medium is a porous solid, the detecting medium is then allowed to dry, for example under ambient conditions.

UV or blue excitation light E of a wavelength of approximately 350 nm is shone on the transparent detecting medium. Any suitable light source for generating excitation light of the required wavelength maybe employed. Examples encompass white light sources, such as a monochromator originated from a mercury lamp, light emitting diode (LED), laser diode (LD) and conventional lasers. The excitation light source may be further combined with one or more filters for obtaining the required excitation light wavelength or excitation light wavelength range. Said light sources are known in the art and may be the same as employed in known spectrophotometers. In certain systems, the excitation light may perform a dual function and also be used as an indicator of the air quality, for example by variation of intensity or colour depending on the level of the aldehyde pollutant in the gas flow. Thus, an air purifier may provide a color coded light output which represents the air quality, and one or more of the light sources used to provide that output information may also be used to generate the excitation light E.

When an aldehyde passes through the detecting medium 16 the aldehyde in the gas can bind i.e. react with the carbon-based dots 18. The carbon-based dots usually exhibit a surface modification or functionalization which renders them reactive to the aldehyde and which results from the method by which they are prepared. Porous solids are appropriate detecting mediums because they possess a large surface area for loading the carbon-based dots, and the pores facilitate diffusion of the formaldehyde molecules to the inner part of the medium.

The excitation light excites the carbon-based dots which then emit luminescent light L of a different, longer, wavelength. The emitted excitation light L can be analyzed by a user or by detecting means.

The emitted luminescent light is characteristic of the extent to which the carbon-based dots are bonded to formaldehyde. Therefore, by analysis of the emitted light, the user can determine how much formaldehyde has been adsorbed by the detecting medium 16. In turn, the user can thereby determine how much formaldehyde has been adsorbed by the filter 14, and based on that filter's known CCM, the remaining filter lifetime.

The filter 14 and detecting medium 16 maybe exposed to the same flow, i.e. the gas flow with the same flow rate and aldehyde concentration, in parallel. Thus, the amount of exposure to the aldehyde will be proportional to the area of the detecting medium or the filter. Thus, if the amount of exposure seen by the detecting medium can be determined from analysis of the emitted luminescent light, then the amount of exposure of the filter can also be derived.

The adsorption performed by the detecting medium will depend on the adsorption efficiency, which will be known in advance. From this information, the determined amount of adsorption can be converted to a total exposure to the aldehyde. The known total exposure limit of the filter then enables a remaining lifetime to be estimated.

The system can be calibrated using gases including known concentrations of aldehydes, so a particular luminescence by the carbon-based dots can be correlated with a particular loading of the filter, and therefore that filter's remaining lifetime. Alternatively, the relationships between amount of exposure, detection medium adsorption level and filter adsorption level may be obtained based on theoretical analysis. In particular, the relationship between filter loading and lifetime may be provided by the filter manufacture, and the relationship between detecting medium loading and photoluminescence property may be provided by the manufacturer or by experiment.

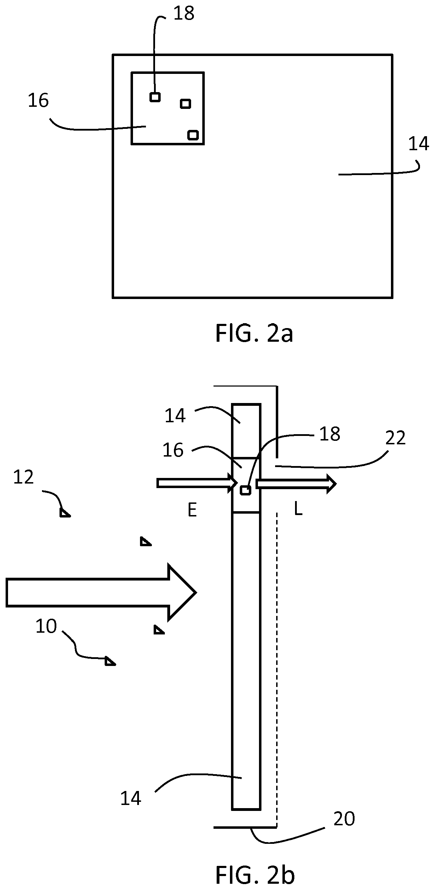

Figure 2a shows an example of a filter 14 and detecting medium 16 for use in a system according to the invention. In this example, the detecting medium 16 and the filter 14 are in parallel. That is, part of the gas passes through the detecting medium 16 and part of the gas passes through the filter 14. The filter 14 has a larger surface area than the detecting medium 16 and therefore the majority of the gas passes through the filter 14. The same gas passes through the filter 14 and the detecting medium 16 for the same period of time, and therefore the amount of aldehyde adsorbed by the filter can be calculated by analyzing the luminescent light emitted by the carbon-based dots 18.

Fig 2b shows a cross section of the same filter 14 and detecting medium 16 shown by Figure 2a. Other components of the system are also shown using the same reference numbers are used as in Figure 1 for the same components, and a description is not repeated. This system also comprises an outer casing 20 which can be formed of any suitable material, for example plastics. The outer casing 20 includes an output window 22 which provides a user with an external view of the detecting medium 16. The output window 22 may be any appropriate gap in the case which allows sight of the detecting medium 16. Thus, the luminescent light L emitted by the carbon-based dots is visible to the user. Therefore, conveniently, the user can analyze the luminescent light L by taking an image of the luminescent light L with an image capture device, for example a standalone camera or a smart phone.

A computer program may then be used to control an image processing unit to process that image and determine information relating to a color spectrum of the image and then estimate a remaining filter lifetime based on that information. In particular, the information can relate to the red, green and blue color components of the image. Conveniently, the image capture device and the image processing unit can be the user's smart phone, and the computer program can be an app on the smart phone. This method of analysis, compared to a professional light detector, provides a low-cost and portable solution.

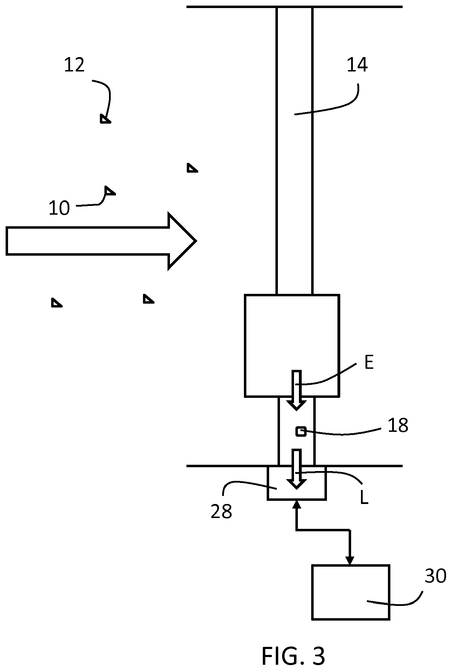

Figure 3 shows a third example of a system for removing aldehyde from a gas. In this example, the system comprises an internal detector 28 for detecting the luminescent light L. The detector 28 detects the luminescent light L having a luminescence property, and a controller 30 determines information relating to the luminescence property and estimates a remaining filter lifetime from the determined information. The controller 30 controls the processing of the detector signals and also controls operation of the flow control device and light source (not shown).

The remaining filter lifetime can be displayed by the computer program or controller by means of a display. The display may indicate the remaining lifetime in months, or by a color that corresponds to a particular lifetime in months. In addition, an alert may inform the user when an abnormal or sudden change of formaldehyde level occurs, and the trend of formaldehyde levels may be assessed to suggest users check the quality of their furniture, to use an air purifier or open a window etc.

In one embodiment, the gas is air and the system is an air purifier. An air purifier is a device which removes contaminants from the air in a room. These devices are commonly marketed as being beneficial to allergy sufferers and asthmatics and may reduce or eliminate second-hand tobacco smoke. Commercially graded air purifiers are manufactured as either small stand-alone units or larger units that can be affixed to ventilation and air conditioning units. The detecting medium can form part of the filter (for example which is either stretched or pleated sheets). Alternatively, the detecting medium can form part of an air quality indicator on an air purifier.

The carbon-based dots maybe selected from GQDs, carbon nanodots and polymer dots. The carbon-based dots may exhibit an average largest dimension of 100 nm or less, preferably 50 nm or less, 20 nm or less, and more preferably 10 nm or less, such as 5 nm or less. The largest dimension designates the largest size of the carbon-based dots in one spatial direction. This means that the other (two) spatial directions of the carbon-based dots exhibit the same or even smaller diameters than the average largest diameter. The size of the carbon-based dots is usually not determined by means of any method but is controlled by the preparation method. Carbon-based dots of particular sizes may be synthesized by laser irradiation of graphite flasks in polymer solution. Size control of the carbon-based dots may be achieved by tuning the laser pulse width.

Carbon-based dots may be prepared and functionalized according to Liu R. et al., An Aqueous Route to Multicolor Photoluminescent Carbon Dots Using Silica Spheres as Carriers, Angew. Chem. Int. Ed. 2009, 48, pp. 4598-4601; Chen X. et al., Purification, organophilicity and transparent fluorescent bulk material fabrication derived from hydrophilic carbon dots, RSC Adv., 2015, 5, pp. 14492 -14496; and Wang Y. et al., Carbon quantum dots: synthesis, properties and applications, J. Mater. Chem. C, 2014, 2, 6921-6969, the contents of which are incorporated herein by way of reference in their entirety.

Preparation of graphene dots, carbon dots and polymer dots with functionalized surfaces are disclosed for example in Tetsuka H. et al.; Optically tunable amino-functionalized graphene quantum dots, Advanced Materials, 2012, vol. 24, pp. 5333-5338 and Zhu S. et al. The photoluminescence mechanism in carbon dots (graphene quantum dots, carbon nanodots, and polymer dots): Current state and future perspective; Nano Research; 2015, vol. 8, pp. 355-381, the contents of which are incorporated herein by way of reference in their entirety. The morphological, elemental and structural characterizations of carbon-based dots may be determined by well-known methods such as scanning electron microscopy (SEM), including low-vacuum SEM and low-temperature SEM, transmission electron microscopy (TEM), atomic force microscopy (AFM), photon correlation spectroscopy (PCS), X-ray photoelectron spectroscopy, and X-ray diffraction (XRD). The photoluminescent properties of carbon-based dots may be easily tested. It will be appreciated that GQDs, carbon nanodots and polymer dots are only examples of carbon-based dots and other carbon based species of the above-mentioned size range may be employed as well.

GQDs are preferably used for the binding the gaseous aldehyde. GQD is usually crystalline with a diameter of below 10 nm and a thickness of several graphene layers. GQDs mainly consist of carbon and have photoluminescent properties. It is reported that GQDs with terminal primary amino-groups have appropriate photoluminescent properties and in particular have a high quantum yield compared to GQDs terminated with carboxylic acid and epoxide groups. Therefore, GQDs provide high photoluminescent intensity and therefore have a high sensitivity. Therefore, when the aldehyde reacts with amino groups of the GQDs, the photoluminescent intensity will be expected to decrease.

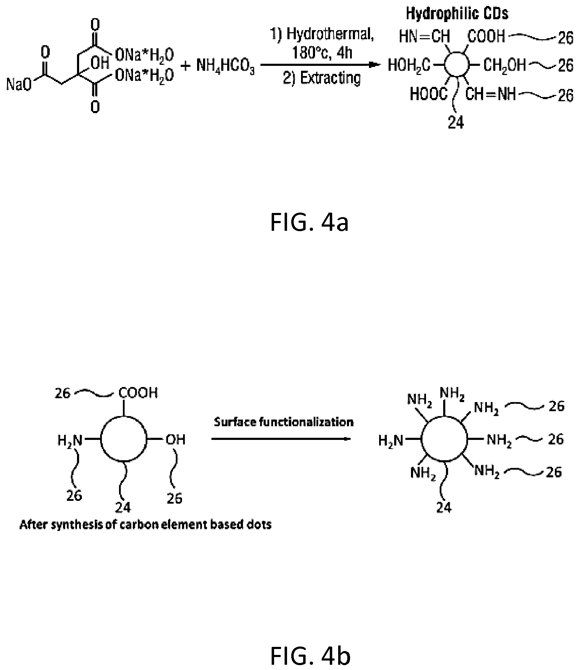

Fig. 4a shows the synthesis of carbon-based dots 24 exhibiting organic polar groups 26. 0.4 g sodium citrate di-hydrate, 3.0 g NH₄HCO₃ and 20 mL high-purity water are sealed into a 100 mL Teflon® coated stainless steel autoclave and reacted under hydrothermal reaction conditions at 180°C for 4 hours. 0.6 mg/mL organic polar group functionalized carbon nanodots are obtained by dialyzing for 16 hours. Further details of the process maybe obtained from Chen X. et al., "Purification, organophilicity and transparent fluorescent bulk material fabrication derived from hydrophilic carbon dots", RSC Adv., 2015, 5, 14492 -14496, the contents of which are incorporated herein by way of reference in their entirety. The carbon-based dots 24 have organic polar groups 26, such as a -COOH group, -CH₂OH group, or -CH=NH group which may be used to attach the dots to a porous detecting medium. Particular organic polar groups 26 may be furthermore subjected to selective reactions for modification of the same. For instance, an imine residue may be easily converted to an amino functionality.

Fig. 4b shows the surface functionalization of carbon-based dots, using the -NH₂ group as example. Without specific surface functionalization, the surface of carbon-based dots may possess few and different kinds of surface groups, such as -COOH, -OH or -NH₂. To functionalize the carbon-based dots, suitable methods can be used to generate carbon-based dots with the desired functional groups, such as -NH₂ groups. Surface functionalization methods for carbon-based dots are known in the art.

As outlined above, the properties of the luminescent light L are used to determine the amount of loading of the detection medium with aldehyde, and in turn the loading of the filter. In particular, the color of the luminescent light changes. This color can be analyzed in any suitable manner. Most simple is the analysis of the red green and blue color components, since a typical image sensor includes red green and blue color sensing sub-pixels.

Experiments were conducted to show the effect. In these experiments, formaldehyde was added to filters in liquid form to simulate the loading of the detection medium over time.

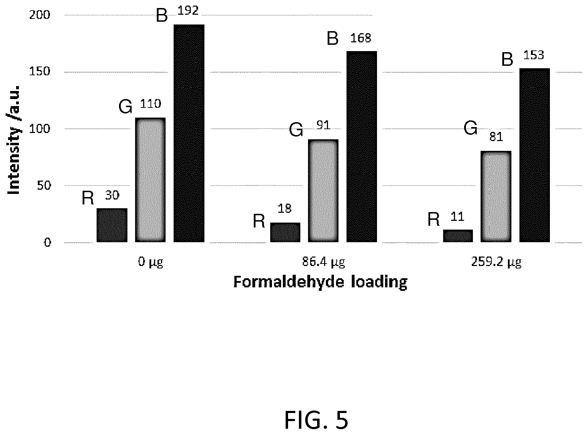

Fig. 5 shows the effect of binding formaldehyde in the detection medium to the red (R), green (G) and blue (B) components of an image of the luminescent light received from the detection medium. It shows the light intensity (in arbitrary units) for the three different color components at different levels of loading of the detection medium.

A 1 mg/mL aqueous solution of GQDs having a size of around 10 nm was prepared, and 100 µL of that solution was added to nitrocellulose having a diameter of 4 cm, an area of 6.3 cm² and a pore size of 400 nm. The medium was dried under ambient conditions for one hour. Then different amounts of formaldehyde were added. A picture of the detecting medium, following illumination by the excitation light was then taken by a camera, followed by the image processing to extract the R, G and B components of the image. The relationship between formaldehyde amount and intensities (or relative intensities) of the R, G and B components can be deduced. This relationship can be used to quantitatively determine the lifetime of the filter.

For example, one example of filter (the NanoProtect Pro S3 filter) has a total area of 3.6 m² and can adsorb 1500 mg formaldehyde which corresponds to an adsorption density of around 41.6 µg/cm². Thus, a detecting medium of around 6.3 cm² must show varying photoluminescent properties until around 260 µg is adsorbed (41 µg/cm² * 6.3 cm²) of formaldehyde. As shown in Fig. 5, the R, G and B components decreased as the amount of formaldehyde was added. In absolute terms, the B component decreased the most significantly. In relative terms, the R component decreased the most significantly but with lower intensity levels. The intensity of all three color components kept decreasing until the amount of formaldehyde loading was up to around 260 µg. Therefore, such a detecting medium is appropriate to determine the lifetime of the filter.

Measures may either be taken to ensure the image is only the luminescent light L. For an internal image sensor, this can simply be achieved by arranging the components in a light shielded region within the housing so that only the luminescent light L can reach the image sensor. For an external image sensor, such as a mobile phone, an interface may be provided against which the mobile phone is applied, and which blocks all ambient light. However, an alternative is to perform a calibration step, whereby the user takes an image of the detecting medium when the excitation light E is not activated, and then takes an image with the excitation light activated. In this way, the color contributions from light which is not caused by the photoluminescence can be cancelled.

The analysis of the color components may be based on absolute values or relative values. For example, the ratio of blue intensity to red intensity in the three images shown in Fig. 5 varies from 6.4 to 9.3 to 13.9, and the ratio of green to red varies from 3.6 to 5.0 to 7.3. Thus, the largest relative change is seen in the red component, but this may be difficult to measure accurately because of the low red content. The blue component may be measured more accurately because of the large signal, or else ratios between color components may be used. Any combination of these possibilities is of course possible.

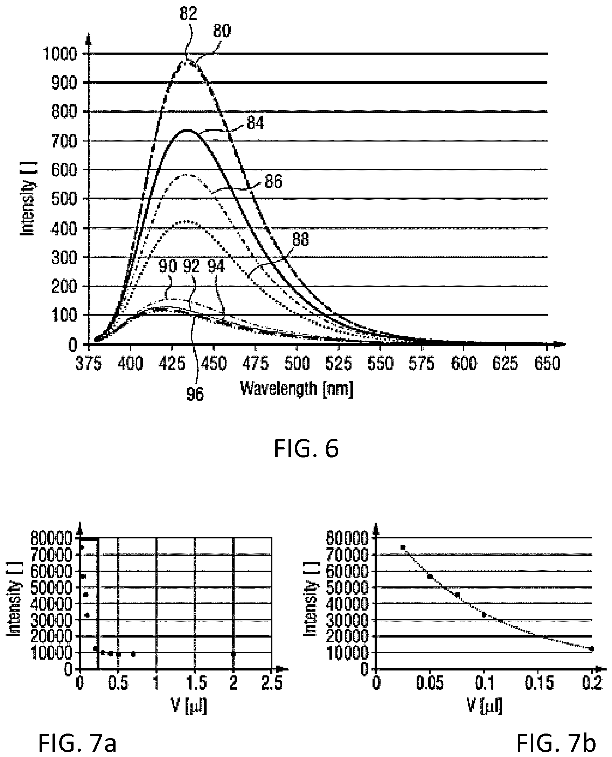

Fig. 6 shows the change of intensity of luminescent light dependent from different concentrations of the diluted formaldehyde solution added into a carbon dots solution of prepared according to Fig. 4. The luminescence tests were performed using the Hitach F-4600 spectrometer (work voltage 700 V, front Silt: 2.5 nm, back slit: 2.5 nm, excitation wavelength 350 nm and emission wavelength 435 nm). Different amounts of formaldehyde were added: 0 µL (80), 0.025 µL (82), 0.05 µL (84), 0.075 µL (86), 0.1 µL (88), 0.2 µL (90), 0.3 µL (92), 0.4 µL (94), and 0.5 µL (96), each dissolved in double distilled high purity water to a volume of 1 mL. It can be seen that increasing concentrations of formaldehyde result in decreased luminescence intensity.

Figs. 7a shows that the luminescence intensity of carbon-based dots is dependent on the amounts of formaldehyde added.

Fig. 7b shows an enlarged view of part of Fig. 7a. It can be seen that amounts of about 0.05 µL to about 0.1 µL formaldehyde exhibit an essentially linear relationship with luminescence intensity rendering said concentration range particularly suitable for the quantitative determination of formaldehyde.

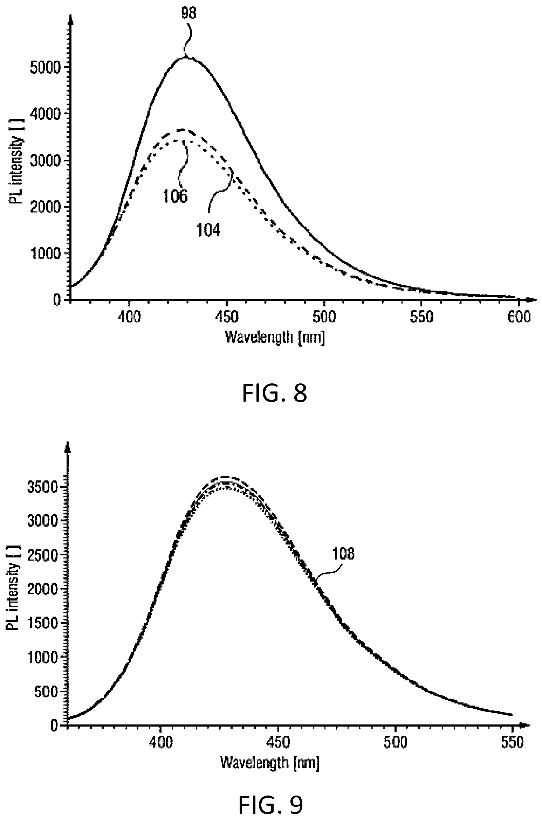

Fig. 8 shows the response of GQDs functionalized with amino-groups (NH₂-GQDs) towards different 0 µg formaldehyde (98), 20 µg formaldehyde (104), and 40 µg formaldehyde (106) following illumination using 350 nm excitation light. It can be seen that 20 µg and 40 µg formaldehyde in 1.5 mL NH₂-GQDs solution induced around 32% and 35% intensity decrease, respectively, which demonstrates that NH₂-GQDs are suitable for quantitative formaldehyde detection.

Fig. 9 shows that NH₂-GQDs are selective for formaldehyde. The emitted light showed little change following contact with several common indoor air pollutants, namely methanol (1.66 wt.-%), ethanol (1.66 wt.-%), toluene (1.66 wt.-%), and acetone (1.66 wt.-%).

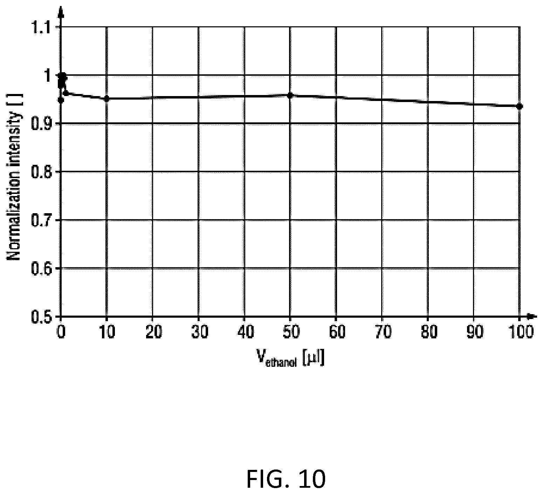

Fig. 10 shows that different amounts of ethanol have no effect on the photoluminescent properties of NH₂-GQDs.

The example above is based on analysis of the color spectrum of the luminescent light. The example of red, green and blue color component sensing is only one example which is particularly suitable for a mobile phone image sensor. Any set of color components may be used which enable the color point to be determined. The results above also show that the overall intensity alone may be sufficient, for example even allowing a simple monochromatic light intensity sensor to be used (as long as ambient light can be avoided or compensated). Alternatively, a single-color sensor may be used for a color which is affected by the aldehyde loading.

The detection medium absorbs aldehyde and so itself performs a filtering function. However, this filtering function is not the primary purpose of the detection medium. For example, the detection medium may be exposed to an area of the gas flow which is less than 10% or even less than 5% of the gas flow area provided to the aldehyde filter. The aldehyde filter is of a different type, and in particular does not make use of carbon-based dots.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A system for removing aldehyde (12) from a gas, comprising:
a filter (14) through which at least a portion of the gas is to be passed for removing aldehyde from the gas;
a detecting medium (16) through which at least a portion of the gas is to be passed comprising photoluminescent carbon-based dots (18); and
a light source for emitting an excitation light (E) through the detecting medium for exciting the carbon-based dots which thereby emit luminescent light (L).

2. A system according to claim 1, wherein the gaseous aldehyde is one or more of formaldehyde, acetaldehyde, propionaldehyde, benzaldehyde and acrylaldehyde.

3. A system according to any preceding claim, wherein the detecting medium is a liquid, gel or porous solid.

4. A system according to any preceding claim, wherein the filter and the detecting medium are positioned parallel to each other.

5. A system according to any preceding claim, wherein the carbon-based dots are graphene dots, carbon nanodots or polymer dots.

6. A system according to any preceding claim, wherein the carbon-based dots are functionalized with organic polar groups, wherein the organic polar group is an amino group.

7. A system according to any preceding claim, wherein the excitation light has a wavelength between 250 nm and 500 nm and the luminescent light has a wavelength between 400 nm and 600 nm.

8. A system according to any preceding claim comprising a detector (28) for detecting the luminescent light (L), the luminescent light (L) having a luminescence property, and a controller (30) for determining information relating to the luminescence property and estimating a remaining filter lifetime from the determined information.

9. A system according to any preceding claim, comprising an outer casing (20) and an output window (22), the output window for providing an external view of at least a portion of the detecting medium.

10. A system according to any preceding claim, wherein the gas is air and the system is an air purifier.

11. A computer program for controlling an image processing unit to process an image captured of the at least a portion of the detecting medium of the system according to any preceding claim, wherein the computer program is adapted for determining information relating to a color spectrum of the image and estimating a remaining filter lifetime from the determined information.

12. A computer program according to claim 11, wherein the information relating to a color spectrum comprises the red, green and blue color components.

13. A method of estimating a remaining filter lifetime of a filter for reducing an amount of aldehyde in a gas, comprising:
illuminating a detecting medium through which the gas has been passed comprising photoluminescent carbon-based dots with an excitation light for exciting the carbon-based dots which thereby emit luminescent light, wherein the gas has been passed through the filter and the detecting medium for a same time period;
detecting the luminescent light (L), the luminescent light (L) having a luminescence property;
determining information relating to the luminescence property; and
estimating a remaining filter lifetime from the determined information.

14. A method as claimed in claim 13, wherein:
detecting the luminescent light comprises capturing an image of a portion of a surface of the detecting medium; and
determining information relating to the luminescence property comprises determining information relating to a color spectrum of the image.

15. A method according to claim 14, wherein the information relating to a color spectrum comprises the red, green and blue color components.
